# DEMANDE DE BREVET EUROPEEN

(11) **EP 1 155 902 A1**
(43) Date de publication de la demande: **21.11.2001**
(21) Numéro de dépôt: 01401240.5
(22) Date de dépôt: 15.05.2001
(51) Int. Cl.: B60N 2/46

(54) **Bloc d'accoudoir pour siège de véhicule de travaux**

(30) Priorité: 17.05.2000 FR 0006279
(71) Demandeur: Etablissements Michel, 60240 Montagny-en-Vexin (FR)
(72) Inventeur: Michel, Luc, 95280 Jouy le Moutier (FR)
(74) Mandataire: Gorree, Jean-Michel

(57) **Abrégé**

Bloc d'accoudoir (9) pour accompagner un siège (1) de véhicule de travaux, siège sur un côté duquel est situé un manipulateur (5) de télécommande d'au moins une fonction du véhicule, ce manipulateur étant disposé en avant de l'accoudoir ; il comprend : un accoudoir (6) ; un socle de montage (11) ; des moyens de support (12) interposés entre ledit accoudoir (6) et ledit socle (11) et propres à autoriser une translation axiale (10) de l'accoudoir (6) par rapport au socle (11) de part et d'autre d'une position centrale ; et des moyens de rappel élastique agencés pour ramener l'accoudoir (6) dans ladite position de repos lorsqu'il n'est pas sollicité en translation.

## Description

La présente invention concerne des perfectionnements apportés aux blocs d'accoudoir pour accompagner un siège de véhicule de travaux, siège sur un côté duquel est situé un manipulateur de télécommande d'au moins une fonction du véhicule, ce manipulateur étant disposé en avant de l'accoudoir, ce bloc d'accoudoir comprenant :
- un accoudoir,
- un socle de montage et
- des moyens de support interposés entre ledit accoudoir et ledit socle et propres à autoriser une translation axiale de l'accoudoir par rapport au socle de part et d'autre d'une position centrale.

L'invention concerne également des perfectionnements apportés aux sièges pour véhicule de travaux, sur un côté desquels est fixée une console latérale supportant un manipulateur de télécommande d'au moins une fonction du véhicule.

L'invention concerne enfin des véhicules de travaux qui sont équipés de tels blocs d'accoudoir et/ou sièges.

Dans la suite de la description, on désignera par "axial" la direction d'orientation du siège du conducteur du véhicule ou toute direction parallèle, et par "avant" le sens axial dans lequel est orienté le siège et par "arrière" le sens axial opposé.

Pour soulager la fatigue du conducteur qui peut rester longtemps assis aux commandes de son engin, il est possible d'associer au siège un accoudoir sur lequel le conducteur peut appuyer son avant-bras, notamment la partie de son avant-bras située en avant du coude, tandis que sa main actionne le manipulateur.

Selon le type de commande assurée, le manipulateur peut être à poignée déplaçable monodirectionnellement, le plus fréquemment alors dans le sens axial, pour assurer la commande d'un départ ou sélectivement de deux départs, ou bien il est peut être du type à poignée déplaçable bidirectionnellement, axialement et transversalement (manoeuvre en croix), pour assurer la commande de deux paires de départs ou d'une paire de départs et d'un départ isolé qui sont disposés en croix.

Il en résulte que, lors de l'actionnement du manipulateur, le conducteur est amené à bouger son avant-bras axialement dans tous les cas, et éventuellement transversalement au niveau de son poignet.

Or, dans le cas d'un accoudoir monté fixe, l'avant-bras du conducteur en appui sur cet accoudoir frotte en permanence sur celui-ci : il peut en résulter à la longue une irritation de la peau et une lésion musculaire, et la présence de l'accoudoir fixe, au lieu de soulager le conducteur, peut finir par entraîner une fatigue accrue de l'avant-bras.

Le document FR-A- 2 770 468 décrit un siège de conduite pour engins qui comporte certes un accoudoir susceptible de divers mouvements. Toutefois, cet accoudoir connu ne présente pas de position de référence, de sorte que l'accoudoir reste dans la position occupée au moment où l'utilisateur soulève son bras ; lorsque l'utilisateur veut à nouveau reposer son bras, il n'est pas sûr que l'accoudoir se trouvera à l'emplacement correct pour recevoir le bras. Il peut en résulter des accidents si l'utilisateur est surpris de ne pas trouver l'appui recherché.

L'invention a essentiellement pour but de remédier aux inconvénients précités et de proposer un agencement perfectionné qui donne mieux satisfaction aux exigences de la pratique, et en particulier qui permet au conducteur de poser son avant-bras en appui sur l'accoudoir en toute sécurité et sans qu'il en résulte aucune conséquence fâcheuse.

A ces fins, l'invention propose un bloc d'accoudoir pour accompagner un siège de véhicule de travaux, siège sur un côté duquel est situé un manipulateur de télécommande d'au moins une fonction du véhicule, ce manipulateur étant disposé en avant de l'accoudoir, ce bloc d'accoudoir comprenant :
- un accoudoir,
- un socle de montage et
- des moyens de support interposés entre ledit accoudoir et ledit socle et propres à autoriser une translation axiale de l'accoudoir par rapport au socle de part et d'autre d'une position centrale,
lequel bloc d'accoudoir, étant agencé conformément à l'invention, se caractérise en ce qu'il comprend en outre des moyens de rappel élastique agencés pour ramener l'accoudoir dans ladite position de repos lorsqu'il n'est pas sollicité en translation.

Un bloc d'accoudoir ainsi agencé peut suffire en soi lorsque le manipulateur est du type à un ou deux départs disposés axialement, puisqu'alors le conducteur n'a à effectuer avec son avant-bras qu'un unique mouvement axial.

Un tel bloc d'accoudoir peut être réalisé de façon relativement simple.

Dans un premier exemple de réalisation possible, les moyens de support comprennent des moyens de coulissement, l'accoudoir constituant alors un chariot déplaçable en translation axiale par rapport au socle et deux ressorts sont interposés entre le chariot et le socle afin de procurer le rappel souhaité en position centrale de repos de l'accoudoir.

Dans un autre mode de réalisation possible, les moyens de support sont agencés pour constituer un parallélogramme déformable selon la direction de translation axiale, ladite déformation du parallélogramme pouvant être procurée notamment par une flexibilité élastique en direction axiale des bras verticaux du parallélogramme, et/ou par des articulations rotatives d'axes transversaux à la direction de translation axiale, et/ou par des organes déformables de liaison des bras du parallélogramme avec l'accoudoir et/ou le socle.

Toutefois l'agencement simple précité ne suffit plus à soulager efficacement l'avant-bras du conducteur lorsque le manipulateur est du type à trois ou quatre départs disposés en croix puisque dans ce cas l'avant-bras du conducteur est amené à effectuer non seulement un mouvement axial, mais aussi un mouvement transversal au voisinage du poignet.

Dans ces conditions, l'invention prévoit que les moyens de support dudit accoudoir peuvent en outre être propres à autoriser un débattement supplémentaire transversal de la seule partie antérieure de l'accoudoir par rapport au socle de part et d'autre d'une position centrale de repos et que des seconds moyens de rappel élastique sont prévus pour ramener ladite partie antérieure de l'accoudoir dans ladite position de repos lorsqu'elle n'est pas sollicitée transversalement.

Il est alors intéressant que les moyens de support comprennent
- des premiers moyens de support
   - qui sont associés à la partie postérieure de l'accoudoir,
   - qui sont solidarisés au socle et à l'accoudoir en des emplacements respectifs qui sont tous contenus dans un plan sensiblement perpendiculaire à la direction de translation axiale,
   - et qui sont agencés pour autoriser ledit déplacement en translation axiale et également un mouvement de pivotement horizontal dudit accoudoir,
- et des seconds moyens de support
   - qui sont associés à la partie antérieure de l'accoudoir,
   - qui sont solidarisés à l'accoudoir et au socle respectivement en deux emplacements seulement de ceux-ci,
   - et qui sont agencés pour autoriser lesdits déplacements simultanés en translation axiale et transversal de la partie antérieure de l'accoudoir.

Un tel mode de réalisation, qui est préféré, autorise la combinaison des deux types de mouvement de l'avant-bras et le conducteur peut alors laisser son avant-bras en permanence sur l'accoudoir sans ressentir une gêne quelconque.

Dans un premier exemple de réalisation possible, les premiers moyens de support comprennent une plaque rigide fixée au socle et à l'accoudoir, ladite plaque étant sensiblement transversale à la direction de la translation axiale.

Dans un second exemple de réalisation possible, les premiers moyens de support comprennent deux tiges rigides sensiblement parallèles, écartées l'une de l'autre sensiblement transversalement à la direction de translation axiale.

Dans l'un ou l'autre cas, on peut faire en sorte que la plaque ou les tiges soient fixées rigidement au socle et à l'accoudoir et que cette plaque ou ces tiges soient élastiquement déformables en flexion pour autoriser ladite translation axiale et en torsion pour autoriser ledit pivotement horizontal ; ou bien en variante, on peut aussi faire en sorte que la plaque ou les tiges soient fixées à l'accoudoir ou respectivement au socle par l'intermédiaire d'au moins une articulation rotative d'axe transversal à la direction de translation axiale et sont fixées au socle ou respectivement à l'accoudoir par l'intermédiaire d'au moins un plot déformable élastiquement.

Quelle que soit la solution adoptée pour constituer les premiers moyens de support, les susdits seconds moyens de support peuvent comprendre au moins une tige rigide qui est fixée à l'accoudoir et au socle par des liaisons respectives à trois degrés de liberté en rotation, telles que des rotules sphériques ou des plots élastiquement déformables ; ou bien de façon avantageuse, car il s'agit d'une solution simple et peu onéreuse tout en étant efficace, les seconds moyens de support comprennent au moins une tige fixée rigidement à l'accoudoir et au socle et élastiquement déformable en flexion.

Les dispositions techniques conformes à l'invention permettent de réaliser un dispositif structurellement peu complexe et d'un coût modique qui répond parfaitement au but recherché.

Pour être assuré que l'accoudoir suive fidèlement les mouvements de l'avant-bras du conducteur, notamment dans les mouvements transversaux, il est avantageux qu'au moins dans sa partie antérieure la face supérieure de l'accoudoir soit creusée en gouttière d'étendue axiale.

Par ailleurs, il est très souhaitable, notamment dans le cas de mouvements transversaux, que l'avant-bras du conducteur repose sur toute la longueur de l'accoudoir. Pour que le véhicule puisse être utilisé par des conducteurs de tailles diverses, et qui possèdent des avant-bras de longueurs différentes, il est intéressant, le socle étant agencé pour être fixé à l'aide de moyens de fixation sur une embase, que lesdits moyens de fixation et/ou le socle et/ou l'embase soient agencés pour autoriser un réglage de position du socle par rapport à l'embase en direction axiale et/ou en hauteur et/ou en inclinaison.

Selon un autre de ses aspects, l'invention propose un siège pour véhicule de travaux, sur un côté duquel est fixée une console latérale supportant un manipulateur de télécommande d'au moins une fonction du véhicule, lequel siège, étant agencé conformément à l'invention, se caractérise en ce qu'il comporte un bloc d'accoudoir conforme à l'invention tel qu'exposé plus haut et qui est fixé sur le pupitre latéral en arrière dudit manipulateur.

De façon avantageuse dans ce cas, on peut prévoir que le socle du bloc d'accoudoir et/ou la console et/ou les moyens de fixation du bloc d'accoudoir sur la console latérale soient agencés pour autoriser un réglage de position du socle par rapport à la console en direction axiale et/ou en inclinaison de manière à régler l'accoudoir par rapport au manipulateur ; en outre on peut aussi prévoir que la console latérale soit fixée à l'assise du siège par l'intermédiaire de moyens de fixation propres à autoriser un réglage en hauteur et/ou axial et/ou en inclinaison de la console latérale par rapport au siège, un tel agencement autorisant une adaptation aussi parfaite que possible du pupitre à la morphologie du conducteur.

Au surplus, on peut prévoir que la console latérale soit fixée de façon rotative de sorte qu'elle puisse pivoter, vers son extrémité arrière, pour être relevée le long du dossier du siège, cet agencement permettant de dégager le côté du siège pour faciliter la sortie latérale du conducteur.

Selon encore un autre de ses aspects, l'invention propose un véhicule de travaux comportant un siège auquel est associé un accoudoir et sur un côté duquel siège est situé un manipulateur de télécommande d'au moins une fonction dudit véhicule, ce manipulateur étant disposé en avant de l'accoudoir, accoudoir agencé comme exposé plus haut.

Selon encore un autre de ses aspects, l'invention propose un véhicule de travaux comportant un manipulateur de télécommande d'au moins une fonction du véhicule, ce manipulateur étant disposé sur un côté d'un siège dudit véhicule, ledit siège étant agencé comme exposé plus haut.

L'invention sera mieux comprise à la lecture de la description détaillée qui suit de certains de ses modes de réalisation donnés à titre non limitatif. Dans cette description, on se réfère aux dessins annexés sur lesquels :
- la figure 1A est une vue schématique de côté montrant l'ensemble d'un siège de véhicule de travaux auquel est associé un bloc d'accoudoir;
- la figure 1B est une vue schématique de côté montrant un autre agencement d'une partie de véhicule de travaux avec un siège et un bloc d'accoudoir disposé latéralement à celui-ci;
- la figure 2 est une vue schématique de côté, en coupe, d'un mode de réalisation d'un bloc d'accoudoir incorporant les dispositions conformes à l'invention ;
- la figure 3 est une vue schématique en coupe transversale du bloc d'accoudoir de la figure 1 ;
- la figure 4 est une vue schématique en coupe transversale d'une variante du bloc d'accoudoir des figures 2 et 3 ;
- les figures 5, 6 et 7 sont des vues schématiques de côté en coupe de respectivement trois variantes d'un autre mode de réalisation d'un bloc d'accoudoir conforme à l'invention ;
- les figures 8, 9 et 10 sont des vues schématiques de côté, en coupe, de respectivement trois variantes de réalisation d'encore un autre mode de réalisation, préféré, susceptibles d'être constituées avec les dispositions de l'invention ;
- les figures 11 et 12 sont des vues schématiques, depuis l'arrière, de la partie arrière de la variante de réalisation de la figure 10 et montrant respectivement deux variantes possibles de réalisation ; et
- les figures 13A et 13B sont des vues schématiques en perspective de respectivement deux variantes de réalisation avantageuses d'un accoudoir inclus dans un bloc d'accoudoir mettant en oeuvre les dispositions conformes à l'invention.

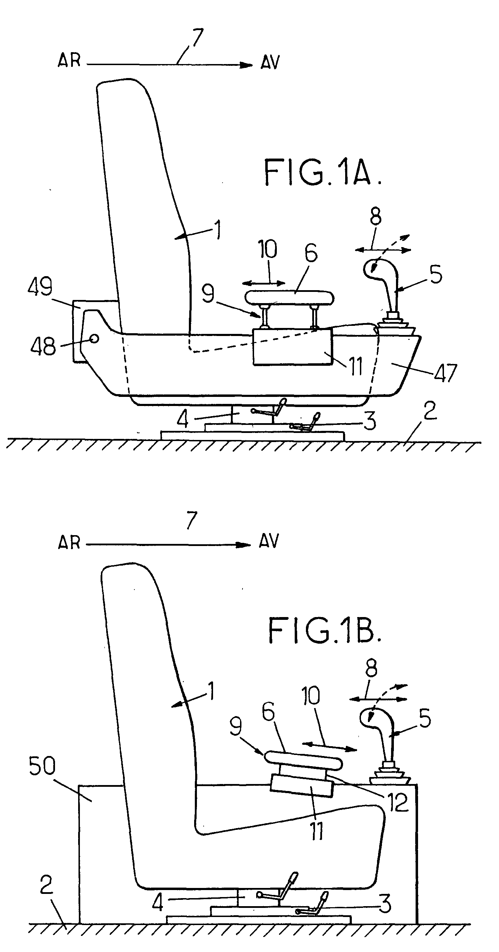

Les figures 1A et 1b illustrent, de façon très schématique, la configuration visée par l'invention, c'est-à-dire un siège 1 d'un véhicule de travaux - siège qui est en général supporté sur un plancher 2 du véhicule par l'intermédiaire de moyens 3 de réglage de position axiale et/ou de moyens 4 de réglage de position verticale - et un manipulateur 5 situé latéralement au siège à portée de main du conducteur (à main droite à la figure 1A ; à main gauche à la figure 1B). Ce manipulateur 5 peut être propre à toute commande à distance d'une ou plusieurs fonctions du véhicule lui-même (déplacement avant/arrière, direction) et/ou d'outils ou d'accessoires portés par celui-ci. Une explication détaillée des configurations illustrées aux figures 1A et 1B sera donnée plus loin.

Pour soulager le conducteur, un appui ou accoudoir 6 est prévu, en arrière du manipulateur 5, pour supporter l'avant-bras du conducteur, ou au moins le coude et/ou la partie de l'avant-bras voisine du coude.

Sur les figures 1A et 1B, on a schématisé par la flèche 7 ce qui sera désigné par "direction axiale" dans la suite de la description, c'est-à-dire la direction de l'axe du siège ou toute direction parallèle. Sur cette flèche 7, on a référencé par AV le sens avant (sens dans lequel le conducteur assis sur le siège regarde) et par AR le sens arrière opposé au précédent.

Il faut bien noter que les explications qui précèdent sont attachées au siège 1, et non pas nécessairement au véhicule : le siège 1 peut en effet être pivotant (ou être monté sur une structure tournante, telle qu'une tourelle de pelleteuse par exemple) pour faciliter le travail du conducteur, et la direction axiale attachée au siège peut ne pas toujours coïncider avec la direction axiale du véhicule.

La télécommande du véhicule et/ou de l'outil à l'aide du manipulateur 1 s'effectue par basculement axial de la poignée comme indiqué par la flèche 8 dans le cas des manipulateurs à un seul départ (monocommande) ou en général à deux départs (le plus souvent une fonction commandée dans deux sens opposés).

Pour éviter les inconvénients indiqués plus haut de l'avant-bras du conducteur accompagnant le déplacement axial du manipulateur 5 tout en reposant sur un accoudoir 6 fixe, on met en oeuvre un bloc d'accoudoir 9 dans lequel l'accoudoir 6 est mobile axialement (flèche 10) et peut accompagner le mouvement axial de l'avant-bras du conducteur lors de l'actionnement du manipulateur 5.

Comme illustré de façon simplifiée aux figures 1A et 1B, le bloc d'accoudoir 9 comprend :
- un accoudoir 6 ;
- un socle de montage 11, permettant le montage du bloc d'accoudoir 9 dans le véhicule dans des conditions qui seront précisées plus loin ;
- des moyens de support 12 interposés entre l'accoudoir 6 et le socle de montage 11, et propres à autoriser ladite translation axiale (flèche 10) de l'accoudoir 6 par rapport au socle 11 de part et d'autre d'une position centrale ; et
- des moyens de rappel élastique agencés pour ramener l'accoudoir 6 dans ladite position centrale ou position de repos lorsqu'il n'est pas sollicité en translation.

On notera ici que l'existence d'une position centrale ou position de repos prédéterminée de l'accoudoir, conformément à l'invention, est fondamentale pour le confort et même pour la sécurité du conducteur. En effet, en l'absence d'une telle position de repos dans laquelle l'accoudoir est rappelé élastiquement, l'avant-bras pourrait quitter l'accoudoir dans une position déviée quelconque et ne plus retrouver son appui lors de la reprise ultérieure du manipulateur si celui-ci doit être déplacé alors dans un sens opposé au précédent.

Au contraire, la mise en oeuvre de moyens de rappel élastique de l'accoudoir place le bloc d'accoudoir en correspondance structurelle avec le manipulateur dont la poignée est elle-même rappelée automatiquement en position de repos lorsqu'elle n'est pas positivement sollicitée par la main du conducteur. On établit ainsi, entre les positions de repos de l'accoudoir et de la poignée du manipulateur, une distance prédéterminée en correspondance avec la longueur de l'avant-bras du conducteur, distance prédéterminée qui est conservée en toute circonstance, aussi bien en travail (translation axiale de l'accoudoir accompagnant le basculement axial de la poignée du manipulateur) qu'en fin de travail lorsque le conducteur abandonne le manipulateur et soulève son avant-bras. Lors de la phase de travail suivante, son avant-bras et sa main retrouvent automatiquement leur place convenable respectivement sur l'accoudoir et sur la poignée du manipulateur.

Le bloc d'accoudoir 9 tel qu'indiqué ci-dessus peut donner lieu à divers exemples de réalisation.

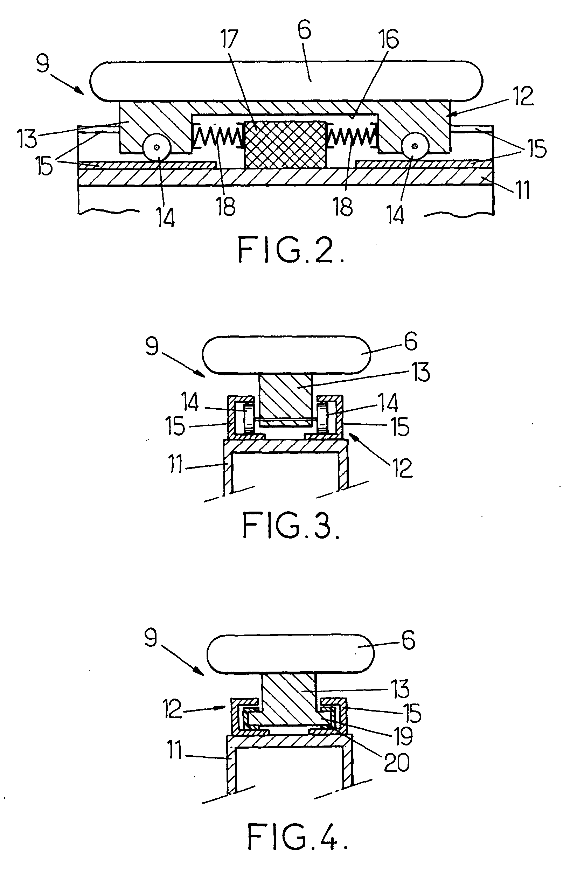

Un premier exemple est illustré aux figures 2 et 3. Les moyens de support 12 sont constitués sous forme d'un chariot 13, de toute conception appropriée, muni de roues ou galets 14 engagés dans des pistes de roulement 15, constituées par exemple de profilés en ], supportées par le socle 11.

Pour définir la susdite position de repos avec rappel élastique de l'accoudoir dans cette position, on peut prévoir ce qui suit. Dans sa partie centrale, le chariot 13 présente un évidement inférieur 16 dans lequel est engagée centralement, sans contact, une butée fixe 17 solidaire du socle 11, cette butée ayant une longueur moindre que celle de l'évidement 16. Deux ressorts 18 sont interposés entre les parois en vis-à-vis de l'évidement 16 et la butée 17, à l'avant et à l'arrière de celle-ci.

Comme illustré à la figure 4, on peut remplacer les galets 14 par des patins 19 saillant latéralement de la base du chariot 13 et engagés dans les glissières 15. Une couche 20 de matériau synthétique à faible coefficient de frottement et à caractéristique autolubrifiante peut être prévue sur les patins 19 et/ou dans les glissières 13.

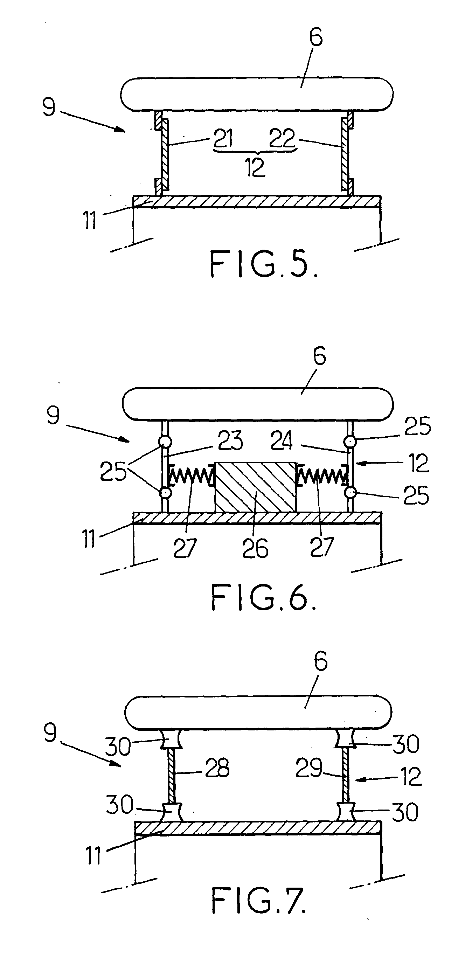

Aux figures 5 à 7 sont représentées diverses variantes d'un autre exemple de réalisation qui fait intervenir des moyens de support à parallélogramme déformable présentant au moins trois points de fixation avec l'accoudoir 6 et avec le socle 11.

Dans l'exemple de la figure 5, les moyens de support 12 font intervenir des organes 21 et 22 situés vers les extrémités respectives de l'accoudoir 6 et constitués en acier à ressort de sorte qu'ils présentent une déformabilité élastique en flexion en direction axiale. Les organes 21 et 22 peuvent être identiques et formés respectivement de deux plaques disposées transversalement à la direction axiale. Egalement l'un des organes, 21 ou 22, peut être constitué d'une plaque transversale à la direction axiale, tandis que l'autre organe, respectivement 22 ou 21, peut être constitué par une simple tige en acier à ressort. Egalement, les deux organes 21 et 22 peuvent être constitués chacun par une paire de tiges écartées l'une de l'autre transversalement à la direction axiale. Egalement encore, les deux organes 21 et 22 peuvent être constitués de trois tiges en acier à ressort, à raison d'une paire de tiges à une extrémité et d'une tige isolée à l'autre extrémité. Dans tous les cas, les organes 21 et 22, plaque ou tige, sont fixés fermement à l'accoudoir 6 et au socle 11, et leur caractéristique de flexibilité élastique procure à la fois la fonction de support et la fonction de rappel élastique en position de repos.

L'exemple de réalisation de la figure 6 fait intervenir des organes rigides 23, 24 de même configuration que ceux 21, 22 de la figure 5 (plaque(s) et/ou tige(s)), mais dépourvus de caractéristique de déformation élastique. Les organes 23, 24 sont réunis à l'accoudoir 6 et au socle 11 par des articulations rotatives respectives 25 d'axe transversal à la direction axiale. Entre les organes rigides 23, 24 et une butée fixe centrale 26, par exemple solidaire du socle 11, sont disposés deux ressorts de rappel 27.

L'exemple de réalisation de la figure 7 fait intervenir des organes rigides 28, 29 sous forme soit de deux plaques transversales, soit de deux paires de tiges disposées transversalement, soit de la combinaison d'une plaque et d'une paire de tiges disposées transversalement. La liaison des organes 28, 29 avec l'accoudoir 6 et le socle 11 est assurée par des plots déformables 30 à structure à base d'élastomère, qui procurent le rappel élastique en position de repos.

Très souvent, cependant, le manipulateur 5 est propre à commander trois ou quatre fonctions et est muni à cet effet de trois ou quatre départs disposés en croix. La commande s'effectue alors par un double déplacement de la poignée, axialement et transversalement (mouvement en croix) .

Il est donc souhaitable, conformément aux buts poursuivis par l'invention, que les moyens 12 de support de l'accoudoir 6 soient propres à autoriser non seulement le mouvement de translation axial envisagé précédemment, mais aussi un débattement supplémentaire transversal de la seule partie antérieure de l'accoudoir 6 par rapport au socle 11 de part et d'autre d'une position centrale de repos, des seconds moyens de rappel élastique étant prévus pour ramener ladite partie antérieure de l'accoudoir dans ladite position de repos lorsqu'elle n'est pas sollicitée transversalement.

La mise en oeuvre pratique des moyens de support aux fins de double déplacement axial de l'ensemble de l'accoudoir et transversal de la partie antérieure de l'accoudoir peut s'effectuer sur la base d'une adaptation des moyens particuliers montrés plus haut aux figures 5 à 7.

D'une façon générale, les moyens de support 12 comprennent alors :
- des premiers moyens de support 31
   - qui sont associés à la partie postérieure de l'accoudoir 6,
   - qui sont solidarisés au socle 11 et à l'accoudoir 6 en des emplacements respectifs qui sont tous contenus dans un plan sensiblement perpendiculaire à la direction de translation axiale,
   - et qui sont agencés pour autoriser ledit déplacement en translation axiale de l'accoudoir 6 et également un mouvement de pivotement horizontal de celui-ci,
- et des seconds moyens de support 32
   - qui sont associés à la partie antérieure de l'accoudoir 6,
   - qui sont solidarisés à l'accoudoir 6 et au socle 11 respectivement en deux emplacements seulement de ceux-ci,
   - et qui sont agencés pour autoriser lesdits déplacements simultanés en translation axiale et transversal de la partie antérieure de l'accoudoir 6.

La mise en oeuvre pratique de ce mode de réalisation peut donner lieu à divers exemples de réalisation.

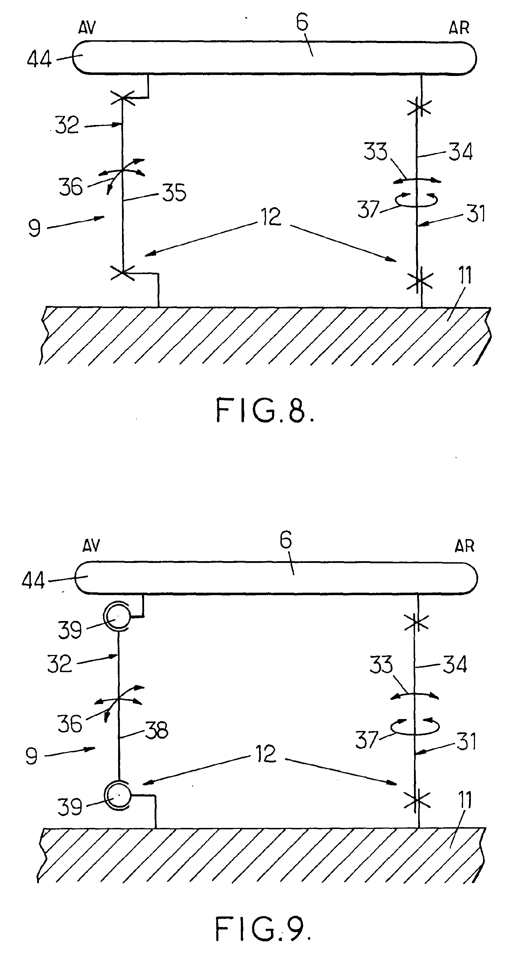

A la figure 8 sur laquelle on a repéré l'avant AV et l'arrière AR de l'accoudoir 6, les moyens de support 12 comprennent des premiers moyens de support 31 situés à l'arrière et formés d'une plaque 34 disposée transversalement à la direction axiale, solidarisée de façon fixe à l'accoudoir 6 et au socle 11 et constituée en acier à ressort pour être élastiquement flexible en direction axiale (flèche 33) en même temps qu'elle est flexible en torsion horizontale (flèche 37).

Les moyens de support 12 comprennent également des seconds moyens de support 32 situés à l'avant et formés d'une tige 35 qui est fixée rigidement en deux points respectifs à l'accoudoir 6 et au socle 11. La tige 35 est, elle aussi, constituée en acier à ressort et présente une flexibilité dans toutes les directions axiale et transversale (double flèche 36).

Dans l'exemple de réalisation de la figure 9, les premiers moyens de support 31 disposés à l'arrière sont constitués de la même manière que dans l'exemple de réalisation de la figure 8. Par contre les seconds moyens de support 32 situés à l'avant comprennent une tige rigide 38 qui est solidarisée à ses extrémités, à l'accoudoir 6 et au socle 11, par des articulations rotatives omnidirectionnelles ou à trois degrés de liberté en rotation, telles que des articulations sphériques 39 (comme illustré) , ou des liaisons à cardan, ou des plots élastiquement déformables.

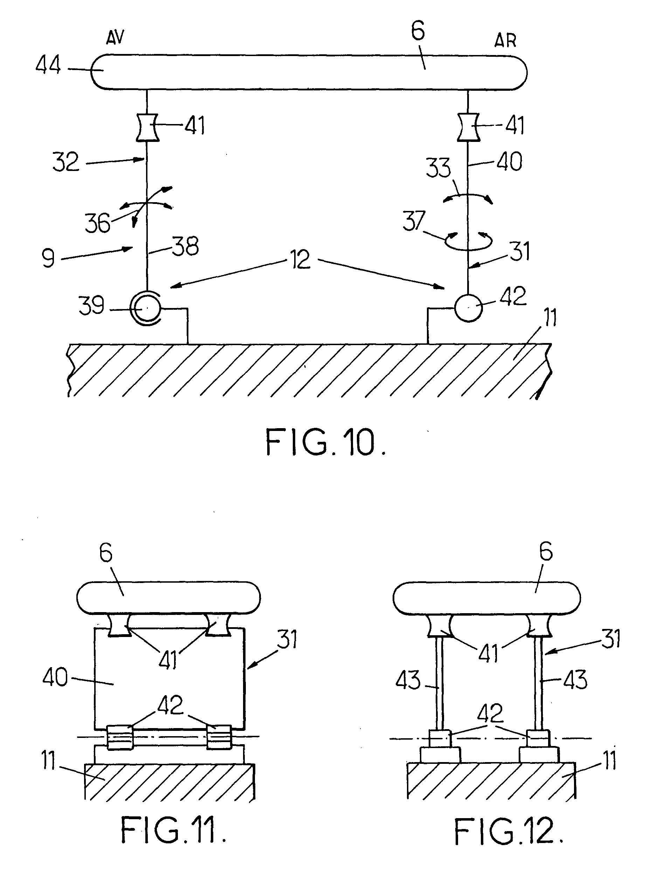

Dans l'exemple de réalisation de la figure 10, les premiers moyens de support 31 situés à l'arrière comprennent une plaque rigide 40 disposée transversalement à la direction axiale. La plaque 40 est fixée à l'accoudoir 6 par l'intermédiaire d'un ou plusieurs plots 41 élastiquement déformables et au socle 11 par l'intermédiaire d'une ou de plusieurs articulations rotatives (charnières) 42 d'axe transversal à la direction axiale, ou bien inversement.

Les seconds moyens de support 32 situés à l'avant peuvent être constitués comme à la figure 8 ou à la figure 9, ou encore comprendre, comme illustré à la figure 10, une tige rigide 38 solidarisée à l'accoudoir 6 par un plot élastiquement déformable 41 et au socle 11 par une articulation sphérique 39, ou inversement.

La figure 11 montre le dispositif de la figure 10 vu de l'arrière, avec par exemple la plaque 40 tenue par deux plots 41 et deux charnières 42 (d'autres agencements étant possibles, par exemple avec un seul plot 41 et/ou une seule charnière 42).

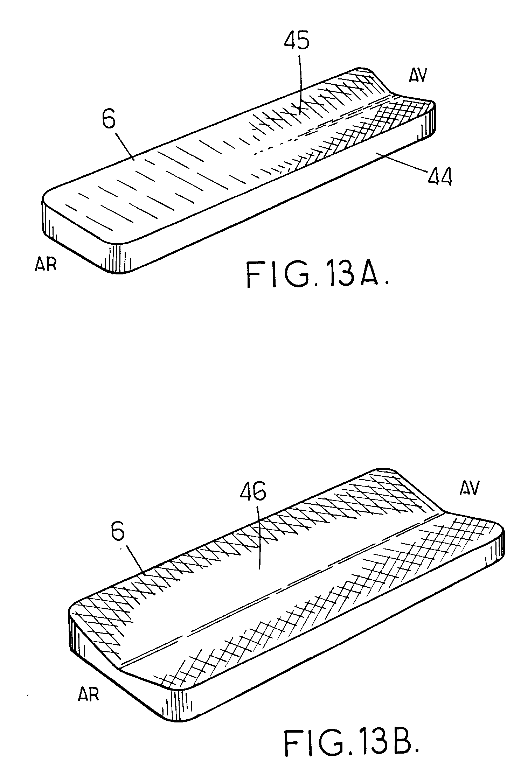

Toutefois d'autres configurations équivalentes à celles des figures 8 à 11 peuvent être obtenues en remplaçant la plaque 34 ou 40 par d'autres organes, notamment par deux tiges écartées transversalement l'une de l'autre. A titre d'exemple, la figure 12 illustre une configuration analogue à celle de la figure 11, en faisant intervenir deux tiges rigides 43 (par exemple identiques à la tige rigide 38 des seconds moyens de support 32 situés à l'avant) raccordées à l'accoudoir 6 par deux plots élastiques 41 respectifs et au socle 11 par deux charnières 42 respectives.

On comprendra, à travers les exemples de réalisation des figures 8 à 12, que les premiers moyens de support 31 peuvent faire intervenir divers organes (plaque, tiges, ...) d'entretoisement de l'accoudoir 6 et du socle 11 associés à divers organes (charnières, plots, élasticité naturelle) conférant la double flexibilité souhaitée axialement et en torsion horizontale, tandis que les seconds moyens de support 32 font appel à des organes d'entretoisement de type quelconque (tige notamment) qui doivent être associés à divers organes (rotules, plots, élasticité naturelle, ...) conférant la double articulation en rotation à trois degrés de liberté souhaitée pour les débattements axial et transversal.

Pour procurer un meilleur confort à l'utilisateur, il est souhaitable qu'au moins la partie antérieure 44 de la face supérieure de l'accoudoir 6 soit creusée en forme de gouttière. A la figure 13A seule la partie antérieure 44 de l'accoudoir est munie d'une telle gouttière 45 qui prend naissance dans la région centrale de l'accoudoir 6 et dont la profondeur est croissante vers l'avant. A la figure 13B, la gouttière 46 s'étend sur toute la longueur de l'accoudoir 6.

Eventuellement la gouttière (notamment la gouttière totale 46) peut présenter un profil en long qui est variable (en profondeur et/ou en largeur) pour s'adapter au mieux à la forme de l'avant-bras de l'utilisateur (non illustré).

Pour ce qui concerne la conception des moyens de support 12, on notera que ces moyens doivent autoriser le déplacement de translation axiale de l'accoudoir 6, et éventuellement le déplacement transversal de sa partie antérieure, sous l'impulsion de l'avant-bras qui actionne le manipulateur. Les amplitudes de ces déplacements de l'accoudoir sont donc en relation avec l'amplitude des oscillations de la poignée du manipulateur. Pour fixer les idées, les courses à prévoir pour l'accoudoir peuvent être d'environ ± 3 cm axialement, et ± 1,5 cm transversalement pour la partie antérieure.

Comme cela ressort de ce qui précède, le socle 11 est agencé pour être fixé à l'aide de moyens de fixation sur une embase de support. Pour permettre une adaptation parfaite de positionnement du bloc d'accoudoir 9 par rapport au manipulateur 5 en fonction de la morphologie du conducteur, il est souhaitable que lesdits moyens de fixation et/ou le socle et/ou l'embase soient agencés de manière à autoriser un réglage de position du socle 11 (et donc de l'accoudoir 6) par rapport au manipulateur 5 en direction axiale et/ou en hauteur et/ou en inclinaison.

Au surplus, selon la configuration et l'agencement du véhicule, le manipulateur 5 peut être monté de manières diverses, de sorte que le bloc d'accoudoir 9 doit lui aussi pouvoir être monté de manières diverses de façon correspondante. Autrement dit, selon les cas, l'embase de support pourra être une partie de l'habitacle du véhicule, par exemple l'embase pourra faire partie du plancher ou d'une paroi latérale de l'habitacle ; ou bien être le siège lui-même ; ou bien être fixée au siège ; etc.

Pour fixer les idées, on va décrire deux agencements susceptibles d'être rencontrés fréquemment dans les véhicules de travaux.

Dans l'agencement de la figure 1A, le siège 1 est équipé d'une console latérale 47 à l'extrémité antérieure de laquelle est monté le manipulateur 5. Cette console 47 peut par ailleurs supporter d'autres organes ou dispositifs de commande et/ou de contrôle. Dans ce cas, le bloc d'accoudoir est monté sur la console 47, en arrière du manipulateur 5. Toujours dans le but d'une meilleure adéquation de l'installation à la morphologie du conducteur, non seulement les moyens de fixation du socle 11 sur la console 47 sont réglables comme indiqué plus haut, mais en outre la console 47 est fixée à l'assise du siège par l'intermédiaire de moyens de fixation (non visibles sur la figure 1A) propres à autoriser un réglage de sa position axiale et/ou en hauteur et/ou en inclinaison par rapport au siège 1.

Au surplus, dans l'exemple illustré à la figure 1A, la console latérale 47 est fixée de façon rotative, à sa partie arrière, en 48 sur le siège (par exemple sur une platine 49 qui est solidaire du siège et qui peut regrouper les moyens de réglage précités) : la console 47 peut ainsi être relevée pour dégager le côté du siège et permettre au conducteur de quitter son siège de ce côté.

Dans d'autres agencements de véhicules de travaux, le manipulateur 5 est, comme illustré à la figure 1B, monté sur un pupitre latéral 50 qui constitue une partie de paroi latérale de l'habitacle du véhicule ou qui est accolé à la paroi latérale du véhicule. Dans ce cas, le bloc d'accoudoir 9 est monté sur ce pupitre latéral 50, en arrière du manipulateur 5 (à la figure 1B, le socle 11 est illustré, à titre d'exemple, monté en position inclinée vers l'avant).

## Revendications

1. Bloc d'accoudoir (9) pour accompagner un siège (1) de véhicule de travaux, siège sur un côté duquel est situé un manipulateur (5) de télécommande d'au moins une fonction du véhicule, ce manipulateur étant disposé en avant de l'accoudoir, ce bloc d'accoudoir comprenant :
- un accoudoir (6),
- un socle de montage (11) et
- des moyens de support (12) interposés entre ledit accoudoir (6) et ledit socle (11) et propres à autoriser une translation axiale (10) de l'accoudoir (6) par rapport au socle (11) de part et d'autre d'une position centrale,
**caractérisé en ce qu'**il comprend en outre des moyens de rappel élastique agencés pour ramener l'accoudoir (6) dans ladite position de repos lorsqu'il n'est pas sollicité en translation.

2. Bloc d'accoudoir selon la revendication 1, **caractérisé en ce que** les moyens de support (12) comprennent des moyens de coulissement, l'accoudoir constituant alors un chariot (13) déplaçable en translation axiale par rapport au socle (11) et **en ce que** deux ressorts (18) sont interposés entre le chariot (13) et le socle (11) afin de procurer le rappel souhaité en position centrale de repos de l'accoudoir (6).

3. Bloc d'accoudoir selon la revendication 1, **caractérisé en ce que** les moyens de support (12) sont agencés pour constituer un parallélogramme déformable selon la direction de translation axiale (10), ladite déformation du parallélogramme étant procurée par une flexibilité élastique en direction axiale des bras verticaux (21, 22) du parallélogramme, et/ou par des articulations rotatives (25) d'axes transversaux à la direction de translation axiale, et/ou par des organes déformables (30) de liaison des bras du parallélogramme (23, 24 ; respectivement 28, 29) avec l'accoudoir (6) et/ou le socle (11).

4. Bloc d'accoudoir selon la revendication 1, **caractérisé en ce que** les moyens de support dudit accoudoir sont en outre propres à autoriser un débattement supplémentaire transversal de la seule partie antérieure (44) de l'accoudoir (6) par rapport au socle (11) de part et d'autre d'une position centrale de repos et **en ce que** des seconds moyens de rappel élastique sont prévus pour ramener ladite partie antérieure (44) de l'accoudoir dans ladite position de repos lorsqu'elle n'est pas sollicitée transversalement.

5. Bloc d'accoudoir selon la revendication 4, **caractérisé en ce que** les moyens de support (12) comprennent
- des premiers moyens de support (31)
• qui sont associés à la partie postérieure de l'accoudoir (6),
• qui sont solidarisés au socle (11) et à l'accoudoir (6) en des emplacements respectifs qui sont tous contenus dans un plan sensiblement perpendiculaire à la direction de translation axiale (10),
• et qui sont agencés pour autoriser ledit déplacement en translation axiale et également un mouvement de pivotement horizontal (37) dudit accoudoir,
- et des seconds moyens de support (32)
• qui sont associés à la partie antérieure (44) de l'accoudoir (6),
• qui sont solidarisés à l'accoudoir (6) et au socle (11) respectivement en deux emplacements seulement de ceux-ci,
• et qui sont agencés pour autoriser lesdits déplacements simultanés en translation axiale et transversal (36) de la partie antérieure (44) de l'accoudoir.

6. Bloc d'accoudoir selon la revendication 5, **caractérisé en ce que** les premiers moyens de support (31) comprennent une plaque rigide (34, 40) fixée au socle (11) et à l'accoudoir (6), ladite plaque (34, 40) étant sensiblement transversale à la direction de la translation axiale (10).

7. Bloc d'accoudoir selon la revendication 5, **caractérisé en ce que** les premiers moyens de support (31) comprennent deux tiges rigides (43) sensiblement parallèles, écartées l'une de l'autre sensiblement transversalement à la direction de translation axiale (10).

8. Bloc d'accoudoir selon la revendication 6 ou 7, **caractérisé en ce que** la plaque (34) ou les tiges sont fixées rigidement au socle (11) et à l'accoudoir (6) et **en ce que** cette plaque ou ces tiges sont élastiquement déformables en flexion (33) pour autoriser ladite translation axiale (10) et en torsion pour autoriser ledit pivotement horizontal (37).

9. Bloc d'accoudoir selon la revendication 6 ou 7, **caractérisé en ce que** la plaque (40) ou les tiges (43) sont fixées à l'accoudoir (6) ou respectivement au socle (11) par l'intermédiaire d'au moins une articulation rotative (42) d'axe transversal à la direction de translation axiale et sont fixées au socle (11) ou respectivement à l'accoudoir (6) par l'intermédiaire d'au moins un plot (41) déformable élastiquement.

10. Bloc d'accoudoir selon l'une quelconque des revendications 5 à 9, **caractérisé en ce que** les seconds moyens de support (32) comprennent au moins une tige rigide (38) qui est fixée à l'accoudoir (6) et au socle (11) par des liaisons respectives à trois degrés de liberté en rotation, telles que des rotules sphériques (39) ou des plots élastiquement déformables (41).

11. Bloc d'accoudoir selon l'une quelconque des revendications 5 à 9, **caractérisé en ce que** les seconds moyens de support (32) comprennent au moins une tige (35) fixée rigidement à l'accoudoir (6) et au socle (11) et élastiquement déformable en flexion.

12. Bloc d'accoudoir selon l'une quelconque des revendications 4 à 11, **caractérisé en ce qu'**au moins dans sa partie antérieure (44) la face supérieure de l'accoudoir est creusée en gouttière (45) d'étendue axiale.

13. Bloc d'accoudoir selon l'une quelconque des revendications 1 à 12, dans lequel le socle (11) est agencé pour être fixé à l'aide de moyens de fixation sur une embase, **caractérisé en ce que** lesdits moyens de fixation et/ou le socle et/ou l'embase sont agencés pour autoriser un réglage de position du socle (11) par rapport à l'embase en direction axiale et/ou en hauteur et/ou en inclinaison.

14. Siège pour véhicule de travaux, sur un côté duquel est fixée une console latérale (47) supportant un manipulateur (5) de télécommande d'au moins une fonction du véhicule,
**caractérisé en ce qu'**il comporte en outre un bloc d'accoudoir (9) selon l'une quelconque des revendications 1 à 13, qui est monté sur la console latérale (47) en arrière dudit manipulateur (5).

15. Siège pour véhicule de travaux selon la revendication 14, **caractérisé en ce que** le socle (11) du bloc d'accoudoir (9) et/ou la console (47) et/ou les moyens de fixation du bloc d'accoudoir (9) sur la console latérale (47) sont agencés pour autoriser un réglage de position du socle (11) par rapport à la console (47) en direction axiale et/ou en inclinaison de manière à régler l'accoudoir (6) par rapport au manipulateur (5).

16. Siège pour véhicule de travaux selon la revendication 14 ou 15, **caractérisé en ce que** la console latérale (47) est fixée à l'assise du siège (1) par l'intermédiaire de moyens de fixation propres à autoriser un réglage en hauteur et/ou axial et/ou en inclinaison de la console latérale (47) par rapport au siège (1).

17. Siège pour véhicule de travaux selon l'une quelconque des revendications 14 à 16, **caractérisé en ce que** la console latérale (47) est fixée de façon rotative (48) de sorte qu'elle puisse pivoter, vers son extrémité arrière, pour être relevée le long du dossier du siège.

18. Véhicule de travaux comportant un siège (1) auquel est associé un accoudoir (6) et sur un côté duquel siège (1) est situé un manipulateur (5) de télécommande d'au moins une fonction dudit véhicule, ce manipulateur (5) étant disposé en avant de l'accoudoir (6),
**caractérisé en ce que** l'accoudoir (6) fait partie d'un bloc d'accoudoir (9) agencé selon l'une quelconque des revendications 1 à 13.

19. Véhicule de travaux comportant un manipulateur de télécommande d'au moins une fonction du véhicule, ce manipulateur étant disposé sur un côté d'un siège dudit véhicule, **caractérisé en ce que** ledit siège est agencé selon l'une quelconque des revendications 14 à 17.

20. Véhicule de travaux selon la revendication 18, dans lequel le manipulateur (5) est monté sur un pupitre (50) qui est disposé latéralement au siège (1) et qui constitue ou qui est accolé à une paroi latérale de l'habitacle du véhicule, **caractérisé en ce que** le bloc d'accoudoir (9) est monté sur ce pupitre (50).
